# EUROPÄISCHE PATENTANMELDUNG

(11) **EP 1 569 476 A1**
(43) Veröffentlichungstag der Anmeldung: **31.08.2005**
(21) Anmeldenummer: 04004591.6
(22) Anmeldetag: 27.02.2004
(51) Int. Cl.: H04Q 7/32, H04L 12/28

(54) **Verfahren zum Betrieb eines ersten Funkkommunikationssystems sowie Vorrichtung und Funkkommunikationssyteme**

(71) Anmelder: SIEMENS AKTIENGESELLSCHAFT, 80333 München (DE)
(72) Erfinder: Dillinger, Markus, 81737 München (DE); Luo, Jijun, 81677 München (DE); Mohyeldin, Eiman Bushra, 81476 München (DE); Schulz, Egon, Dr., 80993 München (DE)

(57) **Zusammenfassung**

Bei dem erfindungsgemäßen Verfahren zum Betrieb eines ersten Funkkommunikationssystems (UMTS1) in einem Frequenzbereich (F1) legt eine Vorrichtung (RNC1) für den Frequenzbereich (F1) fest, ob das erste Funkkommunikationssystem (UMTS1) und/oder ob wenigstens ein zweites Funkkommunikationssystem (UMTS2) den Frequenzbereich (F1) für Übertragungen nutzen darf, wobei das erste und das zweite Funkkommunikationssystem (UMTS1, UMTS2) jeweils einen Funkabdeckungsbereich (FA1, FA2) aufweisen. Erfindungsgemäß nutzen das erste und das zweite Funkkommunikationssystem (UMTS1, UMTS2) den Frequenzbereich (F1), gemäß einer Festlegung der Vorrichtung (RNC1), in einem räumlichen Überlappungsbereich der jeweiligen Funkabdeckungsbereiche (FA1, FA2) zumindest zeitweise gleichzeitig für Übertragungen.

## Beschreibung

Die Erfindung betrifft ein Verfahren zum Betrieb eines ersten Funkkommunikationssystems sowie eine entsprechende Vorrichtung und entsprechende Funkkommunikationssysteme.

Für den Betrieb von Funkkommunikationssystemen sind eine Vielzahl von Funkzugangstechnologien (RAT: Radio Access Technologies) bekannt. Zellulare Funkkommunikationssysteme, die beispielsweise Zeitschlitze und/oder unterschiedliche Frequenzen und/oder unterschiedliche Codes zur Teilnehmertrennung und zur Unterscheidung von Übertragungskanälen verwenden, werden beispielsweise gemäß dem GSM-(Global System for Mobile Communications) Standard oder dem UMTS-(Universal Mobile Telecommunications System) Standard betrieben. Weitere Funkzugangstechnologien sind zum Beispiel in den Standards HiperLAN (High Performance Radio Local Area Network), IEEE (Institute of Electrical and Electronical Engineers) 802.11a bis i und Bluetooth beschrieben.

Funkkommunikationssysteme benutzen fest vorgegebene Frequenzbereiche zur Übertragung ihrer Nutz- und Signalisierungsdaten. So werden beispielsweise zellulare Funkkommunikationssysteme gemäß dem GSM-Standard in einem anderen Frequenzbereich betrieben als Funkkommunikationssysteme gemäß einem UMTS-Standard. Weiterhin verwenden innerhalb eines Übertragungsstandards unterschiedliche Betreiber von Funkkommunikationssystemen unterschiedliche Frequenzbereiche.

Eine starre Zuordnung von Frequenzbereichen zu Funkkommunikationssystemen und somit auch zu den Betreibern der Funkkommunikationssysteme sowie zu bestimmten Funkzugangstechnologien hat den Nachteil, dass Teilnehmerstationen eines Funkkommunikationssystems keine Verbindung aufbauen können oder nur mit einer geringeren Datenrate als gewünscht übertragen können, falls die Kapazitätsgrenze in einem Frequenzbereich des Funkkommunikationssystems beinahe erreicht wird.

Eine immer weiter steigende Zahl von Teilnehmerstationen, die Daten über Funkverbindungen übertragen und eine damit verbundene, immer größer werdende Datenkapazität, die von Funkkommunikationssystemen benötigt wird, weckt bei den Betreibern von Funkkommunikationssystemen den Wunsch, auf einen möglichst breiten Frequenzbereich zugreifen zu können. Zur Zeit werden Vorschläge diskutiert, die einem Funkkommunikationssystem und/oder einer bestimmten Funkzugangstechnologie einen bestimmten Frequenzbereich nur zeitlich begrenzt zuweisen. Die Zuweisung erfolgt dabei an den Bedarf angepasst. Diese so genannte dynamische Frequenzzuweisung (Dynamic Spectrum Allocation) erfordert jedoch zu einer fairen und bedarfsorientierten Berücksichtigung unterschiedlicher Funkkommunikationssysteme einen hohen Signalisierungsaufwand.

Aufgabe der Erfindung ist es ein verbessertes Verfahren zum Betrieb eines ersten Funkkommunikationssystems in einem Frequenzbereich sowie eine entsprechende Vorrichtung und entsprechende Funkkommunikationssysteme anzugeben, um eine verbesserte Nutzung der Ressource Frequenz durch Funkkommunikationssysteme mit gleichen und/oder unterschiedlichen Funkzugangstechnologien zu ermöglichen.

Diese Aufgabe wird mit dem Verfahren sowie der Vorrichtung und den Funkkommunikationssystemen gemäß den unabhängigen Ansprüchen gelöst.

Bei dem erfindungsgemäßen Verfahren zum Betrieb eines ersten Funkkommunikationssystems in einem Frequenzbereich erfolgt durch eine Vorrichtung eine Festlegung für den Frequenzbereich, ob das erste Funkkommunikationssystem und/oder ob wenigstens ein zweites Funkkommunikationssystem den Frequenzbereich für Übertragungen nutzen darf, wobei das erste und das zweite Funkkommunikationssystem jeweils einen Funkabdeckungsbereich aufweisen. Erfindungsgemäß nutzen das erste und das zweite Funkkommunikationssystem den Frequenzbereich gemäß der Festlegung der Vorrichtung in einem räumlichen Überlappungsbereich der jeweiligen Funkabdeckungsbereiche zumindest zeitweise gleichzeitig für Übertragungen.

Das Wort "ob" im vorherigen Absatz ist im Sinne der Erfindung sowohl konditional als auch temporal zu verstehen. Die Vorrichtung ist derart ausgebildet, dass sie für das erste und/oder das zweite Funkkommunikationssystem festlegt, in wie weit sie eine Nutzung des Frequenzbereichs generell zulässt und/oder wann das erste und/oder das zweite Funkkommunikationssystem den Frequenzbereich für Übertragungen nutzen dürfen.

Die Erfindung ermöglicht, dass, beispielsweise bei einer Unterauslastung des Frequenzbereiches durch Übertragungen von Teilnehmerstationen des ersten Funkkommunikationssystem, Teilnehmerstationen des zweite Funkkommunikationssystem den Frequenzbereich zur gleichen Zeit in einem Überlappungsbereich beider Funkabdeckungsbereiche für ihre Übertragungen nutzen können. Der Frequenzbereich kann somit über einen möglichst großen Zeitraum optimal ausgelastet werden. Dies bedeutet insbesondere für einen Lizenznehmer des Frequenzbereichs eine Maximierung seines Umsatzes, da der durch Übertragungen erzielte Umsatz üblicherweise an den Nutzungszeitraum und/oder den Datendurchsatz je Teilnehmerstation gekoppelt ist.

Bei gleichzeitiger Anwendung des erfindungsgemäßen Verfahrens in einer Vielzahl von Frequenzbereichen kann somit sogar eine optimierte Lastverteilung über alle Frequenzbereiche erfolgen und vermieden werden, dass ein Frequenzbereich überlastet wird, während ein anderer Frequenzbereich weit von seiner Auslastungsgrenze entfernt betrieben wird.

Unter einem Funkabdeckungsbereich ist insbesondere der gesamte Raumbereich zu verstehen, innerhalb eine Teilnehmerstation eines Funkkommunikationssystems mit einer beliebigen Funkstation, z.B. einer Basisstation, des Funkkommunikationssystems eine Funkverbindung aufbauen kann. Insbesondere soll auch eine Funkzelle eines zellularen Funkkommunikationssystems unter Funkabdeckungsbereich verstanden werden.

Weiterhin ermöglicht die Erfindung, dass beispielsweise ein Betreiber des ersten Funkkommunikationssystem den z.B. ihm fest zugewiesenen Frequenzbereich einem Betreiber des zweiten Funkkommunikationssystems zur Verfügung stellt. Die gemeinsame und zeitgleiche Nutzung des Frequenzbereichs erfolgt dabei vorzugsweise derart, dass Übertragungen von Teilnehmerstationen des zweiten Funkkommunikationssystems derart gesteuert werden, dass sie Übertragungen von Teilnehmerstationen des ersten Funkkommunikationssystems nur innerhalb von beispielsweise durch die Vorrichtung vorgegebenen Grenzen stören, d.h. Interferenzen werden nach oben begrenzt.

Vorteilhafterweise ist zumindest eines der wenigstens zwei Funkkommunikationssysteme ein zellulares Funkkommunikationssystem.

Mit Vorteil übertragen die wenigstens zwei Funkkommunikationssysteme in dem Frequenzbereich Signalisierungsdaten. Signalisierungsdaten umfassen beispielsweise jede Art von Daten, die zum Aufbau und/oder Aufrechterhalten einer Funkverbindung benötigt wird. Signalisierungsdaten sind beispielsweise auch Adressfelder eines Datenpakets, die benötigt werden, um in dem Datenpaket enthaltene Nutzdaten an die richtige Adresse zu übertragen. Insbesondere sind unter Signalisierungsdaten auch Steuersignale zu verstehen, die den Ablauf einer Datenübertragung, beispielsweise eine zu verwendende Sendeleistung oder eine zu verwendende Datenrate, steuern.

Alternativ oder zusätzlich übertragen die wenigstens zwei Funkkommunikationssysteme in dem Frequenzbereich Nutzdaten. Da Nutzdaten den größten Teil der über eine Funkschnittstelle zu übertragenden Daten ausmacht, ist für die beiden Funkkommunikationssysteme eine gleichzeitige Übertragung von Nutzdaten besonders vorteilhaft. Nutzdaten sind insbesondere diejenigen Daten, die von einer sendenden an eine empfangende Station übertragen werden ohne den Ablauf der Übertragung direkt zu beeinflussen oder für die Übertragung benötigt zu werden. Vielmehr wird die Übertragung der Nutzdaten von Signalisierungsdaten bzw. Steuersignalen gesteuert. Der Anteil an Nutzdaten einer Übertragung kann Null Bit sein, während mit Null Bit an Signalisierungsdaten gar keine Übertragung möglich ist. Beispielsweise sind unter Nutzdaten Bild- und/oder Tondaten, sowie die den Inhalt von Fax-, SMS- (Short Message Service), MMS- (Multimedia Messaging Service) oder Email-Nachrichten festlegenden Daten. Selbstverständlich können Nutzdaten und Signalisierungsdaten sowohl in einem gemeinsamen Übertragungskanal als auch in unterschiedlichen Übertragungskanälen übertragen werden.

In einer bevorzugten Ausgestaltung der Erfindung gibt die Vorrichtung wenigstens einem der wenigstens zwei Funkkommunikationssysteme eine maximale Sendeleistung für Übertragungen in den Frequenzbereich vor. Auf diese Weise können Interferenzen, die Übertragungen von Teilnehmerstationen des in der Sendeleistung begrenzten Funkkommunikationssystems in dem Frequenzbereich und/oder in benachbarten Frequenzbereichen sowie in anderen Funkabdeckungsbereichen des ersten Funkkommunikationssystems bewirken, nach oben beschränkt werden. Dies ist insbesondere dann von Vorteil, wenn der Frequenzbereich beispielsweise dem ersten Funkkommunikationssystem fest zugewiesen ist und das erste Funkkommunikationssystem die Nutzung seines Frequenzbereiches dem zweiten Funkkommunikationssystem gestattet.

Vorteilhafterweise verwenden die wenigstens zwei Funkkommunikationssystem unterschiedliche oder gleiche Zugangstechnologien. Beispielsweise kann das erste Funkkommunikationssystem gemäß dem UMTS-Standard betrieben werden, während das zweite Funkkommunikationssystem gemäß dem Bluetooth-Standard betrieben wird.

Es ist weiterhin von Vorteil, wenn die wenigstens zwei Funkkommunikationssysteme von dem gleichen Betreiber oder unterschiedlichen Betreibern betrieben werden. Handelt es sich um den gleichen Betreiber, so kann dieser beispielsweise ein Funkkommunikationssystem gemäß dem GSM-Standard betreiben und in seine Basisstationen auch Zugangspunkte (engl.: access points) eines drahtlosen lokalen Netzes (WLAN: Wireless Local Area Network) einbinden. Beide Funkkommunikationssysteme werden dann von demselben Betreiber gesteuert und nutzen zusätzlich den gleichen Frequenzbereich. Der Betreiber benötigt daher insbesondere weniger Frequenzen und hat somit gegebenenfalls geringere Lizenzgebühren. Handelt es sich um unterschiedliche Betreiber, so wird durch die Erfindung beispielsweise der gleichzeitige Zugriff mehrerer Betreiber auf einen nicht lizenzierten Frequenzbereich ermöglicht.

In einer weiteren bevorzugten Ausgestaltung der Erfindung teilt die Vorrichtung wenigstens einem der wenigstens zwei Funkkommunikationssysteme mit, welche Funkzugangstechnologien eine Teilnehmerstation des entsprechenden Funkkommunikationssystem in dem Frequenzbereich verwenden darf. So wird beispielsweise ermöglicht, dass bei der Verwendung einer bestimmten Funkzugangstechnologie beispielsweise durch das erste Funkkommunikationssystem nur Funkzugangstechnologien für das zweite Funkkommunikationssystem zugelassen werden, die geringe Interferenzen mit den Übertragungen des ersten Funkkommunikationssystems mit der ersten Funkzugangstechnologie bewirken.

Um insbesondere zu ermöglichen, dass ein einem Funkkommunikationssystem fest zugewiesener Frequenzbereich auch von anderen Funkkommunikationssystemen in einem Überlappungsbereich jeweiliger Funkabdeckungsbereiche zeitgleich genutzt werden kann, ist es von Vorteil, wenn die Vorrichtung ein Bestandteil eines der wenigstens zwei Funkkommunikationssysteme ist.

Die Vorrichtung ist beispielsweise über den Bedarf an Übertragungskapazität, den das eigene Funkkommunikationssystem hat, immer informiert und kann somit eine optimale Auslastung des Frequenzbereichs durch Übertragungen anderer Funkkommunikationssysteme ermöglichen. Bestandteil des Funkkommunikationssystems soll beispielsweise derart verstanden werden, dass die Vorrichtung mit ihren funktionellen Merkmalen entweder in eine bereits bestehende Vorrichtung des Funkkommunikationssystems integriert ist oder es handelt sich um eine dem Funkkommunikationssystem hinzugefügte Einrichtung mit allen Verbindungen zu Funkstationen und/oder Steuereinheiten des Funkkommunikationssystems, die zur Durchführung des erfindungsgemäßen Verfahrens benötigt werden. Selbstverständlich können auch Verbindungen zu Einrichtungen anderer Funkkommunikationssysteme vorhanden sein. In einem zellularen Funkkommunikationssystem, beispielsweise nach dem UMTS-Standard, kann die Vorrichtung beispielsweise in einen Funknetzkontroller (RNC: Radio Network Controller) integriert sein.

Vorteilhafterweise kommuniziert die Vorrichtung mit den wenigstens zwei Funkkommunikationssystemen über eine Leitung und/oder wenigstens über einen Funkkanal. Die Leitung und/oder den wenigstens einen Funkkanal nutzt die Vorrichtung insbesondere um den Funkkommunikationssystemen ihre Festlegung für die gleichzeitige Nutzung des Frequenzbereichs zu teilen. Eine Leitung ist beispielsweise zur elektrischen oder zur optischen Informationsübertragung ausgelegt. Ein Funkkanal nutzt beispielsweise Frequenzen vom optischen Frequenzbereich bis in den Bereich von einigen 10GHz. Zur Datenübertragung auf der Leitung und/oder über den wenigstens einen Funkkanal verwendet die Vorrichtung beispielsweise Übertragungsstandards des jeweiligen Funkkommunikationssystems. Insbesondere können Internetprotokolle der Version 4, 6 oder nachfolgende Versionen (IPv4: Internet Protocol Version 4, IPv6: Internet Protocol Version 6) sowie ATM-Standards (ATM: Asynchronous Transfer Mode) verwendet werden.

Vorteilhafterweise wird als der wenigstens eine Funkkanal ein Rundsendekanal verwendet. Teilnehmerstationen der Funkkommunikationssystemen kann auf diese Weise die Festlegung der Vorrichtung durch eine entsprechende Information auf dem Rundsendekanal mitgeteilt werden, ohne dass eine Funkverbindung der Teilnehmerstationen zu einem der Funkkommunikationssysteme besteht.

Es liegt im Rahmen der Erfindung, dass der Funkkanal von Teilnehmerstationen und/oder Funkstationen der wenigstens zwei Funkkommunikationssysteme empfangen wird. Wird der Funkkanal von Teilnehmerstationen und Funkstationen der wenigstens zwei Funkkommunikationssysteme empfangen, kann das jeweilige Funkkommunikationssystem unmittelbar nach dem Empfang der Festlegung der Vorrichtung Funkverbindungen aufbauen und mit Übertragungen in dem Frequenzbereich beginnen. Empfangen nur Teilnehmerstationen oder nur Funkstationen der wenigstens zwei Funkkommunikationssysteme den Funkkanal, so wird die durch die Vorrichtung erfolgte Festlegung den jeweils nicht den Funkkanal empfangenen Stationen (Teilnehmerstationen bzw. Funkstationen), vor einem Aufbau von Funkverbindungen in dem Frequenzbereich, durch eine entsprechende Information signalisiert.

Mit Vorteil legt die Vorrichtung für wenigstens eines der zwei Funkkommunikationssystem fest, für welchen Zeitraum eine Teilnehmerstation des entsprechenden Funkkommunikationssystems im Frequenzbereich übertragen darf. So wird ermöglicht, einer Teilnehmerstation bzw. dem Funkkommunikationssystem den Nutzungszeitraum bereits vor einem Aufbau einer Funkverbindung zu signalisieren. Während einer Funkverbindung ist keine weitere Signalisierung zum Beenden der Funkverbindung erforderlich. Nach dem festgelegten Zeitraum wird eine bestehende Funkverbindung automatisch beendet.

Die erfindungsgemäße Vorrichtung und die erfindungsgemäßen Funkkommunikationssysteme weisen alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert.

Es zeigen:
- Fig. 1: ein erstes Ausführungsbeispiel eines erfindungsgemäßen Verfahrens mit zwei Funkkommunikationssystemen gemäß dem UMTS-Standard,
- Fig. 2: die Belegung von Frequenzbereichen durch die beiden Funkkommunikationssysteme gemäß Figur 1,
- Fig. 3: ein zweites Ausführungsbeispiel für ein erfindungsgemäßen Verfahren anhand eines Funkkommunikationssystems gemäß dem UMTS-Standard und anhand eines drahtlosen lokalen Netzes,
- Fig. 4: eine erfindungsgemäße Frequenzbereichsinformation, die für eine Vielzahl von Frequenzbereichen jeweils eine maximale Sendeleistung und auswählbare Funkzugangstechnologien angibt,
- Fig. 5: ein drittes Ausführungsbeispiel für ein erfindungsgemäßes Verfahren mit drei Funkkommunikationssystemen und einem nicht fest zugewiesenen Frequenzbereich,
- Fig. 6: ein erfindungsgemäßer Ablauf einer Signalisierung zwischen einer erfindungsgemäßen Vorrichtung und zwei Einheiten von Funkkommunikationssystemen.

Gleiche Bezugszeichen in den Figuren bezeichnen gleiche Gegenstände.

Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder E-mail-Versand und/oder zum Internetzugang.

Eine Funkstation ist beispielsweise eine Basisstation eines zellularen Funkkommunikationssystems oder eine Zugangspunkt (Access Point) eines drahtlosen lokalen Netzes (WLAN).

Die Erfindung kann vorteilhaft mit beliebigen Funkkommunikationssystemen ausgeführt werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- oder UMTS-Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs) gemäß den Standards IEEE 802.11a bis i, HiperLAN1 und HiperLAN2 sowie Bluetooth-Netze.

Die Erfindung kann sowohl mit wenigstens zwei zellularen Funkkommunikationssystemen, mit wenigstens zwei drahtlosen lokalen Netzen als auch mit wenigstens einem zellularen Funkkommunikationssystem und wenigstens einem drahtlosen lokalen Netz durchgeführt werden.

Im Folgenden wird die Erfindung am Beispiel von Mobilfunksystemen gemäß dem UMTS-Standard und eines drahtlosen lokalen Netzes gemäß einem WLAN-Standard beschrieben, ohne jedoch damit zum Ausdruck bringen zu wollen, dass die Erfindung hierauf beschränkt sein soll.

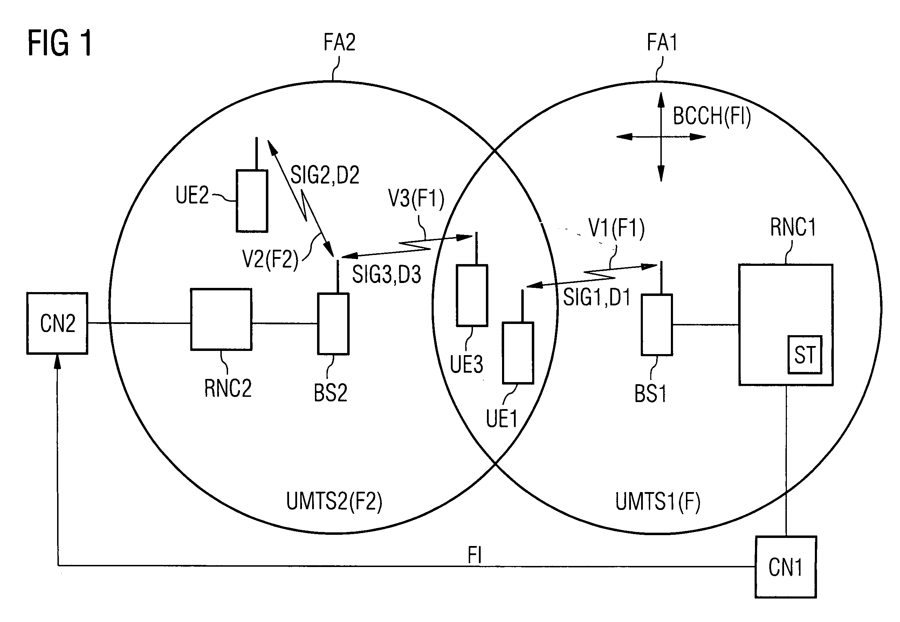

Figur 1 zeigt schematisch ein erstes Funkkommunikationssystem UMTS1 mit einem ersten Funkabdeckungsbereich FA1. Das erste Funkkommunikationssystem UMTS1 verfügt über eine Vielzahl von Basisstationen und Funkzugangskontrollern, wobei die Basisstationen jeweils über Funkzugangskontroller an ein Kernnetz CN1 angeschlossen sind. Über das erste Kernnetz CN1 ist das erste Funkkommunikationssystem UMTS1 mit anderen Funkkommunikationssystemen und/oder mit einem Telefonfestnetz oder dem Internet verbunden.

Aus Gründen der Übersichtlichkeit ist in Figur 1 von den genannten Stationen des ersten Funkkommunikationssystems UMTS1 nur eine erste Basisstation BS1 und ein erster Funkzugangskontroller RNC1 dargestellt. Der erste Funkzugangskontroller RNC1 ist mit dem ersten Kernnetz CN1 beispielsweise über eine elektrische oder optische Leitung verbunden. Ebenfalls über eine optische oder elektrische Leitung ist der erste Funkzugangskontroller RNC1 mit der ersten Basisstation BS1 verbunden. Selbstverständlich können die elektrischen und optischen Leitungen auch als Funkverbindungen realisiert werden. In dem ersten Funkzugangskontroller RNC1 befindet sich eine Steuereinheit ST mit der die Funktionsweise des ersten Funkzugangskontrollers RNC1, insbesondere der Datenaustausch mit der ersten Basisstation BS1 und mit dem ersten Kernnetz CN1, gesteuert werden kann.

Für Funkverbindungen mit Teilnehmerstationen werden von dem ersten Funkkommunikationssystem UMTS1 Frequenzen aus einem Frequenzbereich F und eine erste Funkzugangstechnologie verwendet. Eine Funkverbindung mit der ersten Funkzugangstechnologie im Frequenzbereich F kann mit einer Teilnehmerstation aufgebaut werden, wenn diese über entsprechende technische Vorrichtungen verfügt und zum Aufbau einer Funkverbindung berechtigt ist. Eine Berechtigung kann beispielsweise durch eine Zuordnung der Teilnehmerstation zu dem ersten Funkkommunikationssystem UMTS1 erfolgen und anhand einer in der Teilnehmerstation gespeicherten Kennung überprüft werden.

In dem ersten Funkabdeckungsbereich FA1 des ersten Funkkommunikationssystems UMTS1 befindet sich eine Vielzahl von Teilnehmerstationen mit Funkverbindungen im Frequenzbereich F des ersten Funkkommunikationssystems UMTS1, von denen aus Gründen der Übersichtlichkeit nur eine erste Teilnehmerstation UE1 dargestellt ist. Die erste Teilnehmerstation UE1 hat eine erste Funkverbindung V1 mit der ersten Basisstation BS1. Die erste Funkverbindung V1 erfolgt in einem ersten Frequenzbereich F1 der ein Teilbereich des gesamten Frequenzbereichs F des ersten Funkkommunikationssystems ist. Über die erste Funkverbindung V1 tauschen die erste Teilnehmerstation UE1 und die erste Basisstation BS1 erste Signalisierungsdaten SIG1 sowie erste Nutzdaten D1 aus.

Dem ersten Funkzugangskontroller RNC1 ist bekannt, beispielsweise aufgrund seiner Steuerfunktionalität für Datenübertragungen, wie viele Teilnehmerstationen außer der ersten Teilnehmerstation UE1 Funkverbindungen im ersten Frequenzbereich F1 haben oder einen Verbindungsaufbau wünschen. Weiterhin ist dem ersten Funkzugangskontroller RNC1 bekannt, beispielsweise aufgrund von Messungen der ersten Teilnehmerstation UE1 und der weiteren, nicht dargestellten Teilnehmerstationen, die im ersten Frequenzbereich F1 eine Funkverbindung haben, wie groß Interferenzen in dem ersten Frequenzbereich F1 sind. Aufgrund dieser Informationen ist es dem ersten Funkzugangskontroller RNC1 möglich, zu ermitteln, mit welcher maximalen Sendeleistung Stationen eines zweiten Funkkommunikationssystems UMTS2 mit einer zweiten Funkzugangstechnologie in dem ersten Frequenzbereich F1 senden dürfen. Die maximale Sendeleistung legt der erste Funkzugangskontroller insbesondere so fest, dass Störungen, insbesondere Interferenzen, durch die zusätzlichen Funkverbindungen von Teilnehmerstationen des zweiten Funkkommunikationssystems UMTS2 eine vom ersten Funkkommunikationssystem UMTS1 beispielsweise netzseitig administrierbare Schwelle nicht überschreiten können.

Der erste Funkzugangskontroller RNC1 erzeugt, beispielsweise in der Steuereinheit ST, aufgrund oben genannter Informationen eine Frequenzbereichsinformation FI, der entnehmbar ist, dass nicht zum ersten Funkkommunikationssystem UMTS1 gehörende Teilnehmerstationen mit einer maximalen Sendeleistung und unter Verwendung einer bestimmten Funkzugangstechnologie zeitgleich mit Teilnehmerstationen des ersten Funkkommunikationssystems UMTS1 Funkverbindungen in dem ersten Frequenzbereich F1 haben dürfen. Die Frequenzbereichsinformation FI sendet die erste Basisstation BS1 über einen Rundsendekanal BCCH aus. Die Frequenzbereichsinformation FI ist derart aufgebaut oder wird derart über den Rundsendekanal BCCH gesendet, dass sie nur von Teilnehmerstationen oder Funkstationen empfangen oder verarbeitet wird, die nicht zum ersten Funkkommunikationssystem UMTS1 gehören.

In diesem Ausführungsbeispiel wird die Frequenzbereichsinformation FI zusätzlich über das erste Kernnetz CN1 an ein zweites Kernnetz CN2 des zweiten Funkkommunikationssystem UMTS2 weitergeleitet. Das zweite Kernnetz CN2 ist an einen zweiten Funkzugangskontroller RNC2 angeschlossen, der wiederum mit einer zweiten Basisstation BS2 verbunden ist. Weitere Funkzugangskontroller und Basisstationen des zweiten Funkkommunikationssystems UMTS2 sind aus Gründen der Übersichtlichkeit nicht dargestellt. Das zweite Kernnetz CN2, der zweite Funkzugangskontroller RNC2 sowie die zweite Basisstation BS2 sind Bestandteile des zweiten Funkkommunikationssystems UMTS2, das den ihm zugeordneten Teilnehmerstationen Funkverbindungen mit der zweiten Funkzugangstechnologie innerhalb eines zweiten Funkabdeckungsbereich FA2 in einem zweiten Frequenzbereich F2 ermöglicht. Beispielhaft ist in Figur 1 eine zweite Teilnehmerstation UE2 dargestellt, die eine zweite Funkverbindung (V2) in dem zweiten Frequenzbereich F2 mit der zweiten Basisstation BS2 hat und zweite Signalisierungsdaten SIG2 und zweite Nutzdaten D2 austauscht. Der zweite Frequenzbereich F2 ist beispielsweise so stark ausgelastet, dass einer dritten Teilnehmerstation UE3, die ebenfalls dem zweiten Funkkommunikationssystem UMTS2 zugeordnet ist, eine gewünschte Übertragungsrate im zweiten Frequenzbereich F2 nicht zur Verfügung gestellt werden könnte.

Die geschilderte Überlastung des zweiten Frequenzbereichs F2 ist der dritten Teilnehmerstation UE3 beispielsweise durch Rundsendungen auf einem Rundsendekanal des zweiten Funkkommunikationssystems UMTS2 bekannt. Die dritte Teilnehmerstation UE3 ist so ausgebildet, dass sie, obwohl sie dem zweiten Funkkommunikationssystem UMTS2 zugeordnet ist, Rundsendungen auf dem Rundsendekanal BCCH des ersten Funkkommunikationssystems UMTS1 empfangen kann. Weiterhin befindet sich die dritte Teilnehmerstation UE3 in einem Überlappungsbereich des ersten und des zweiten Funkabdeckungsbereiches FA1, FA2 und empfängt daher den Rundsendekanal BCCH des ersten Funkkommunikationssystems UMTS1 und somit auch die Frequenzbereichsinformation FI. Die dritte Teilnehmerstation UE3 wählt unter Berücksichtigung der Frequenzbereichsinformation FI den ersten Frequenzbereich F1 für eine Funkverbindung mit der zweiten Basisstation BS2 aus. Nachfolgend signalisiert die dritte Teilnehmerstation UE3 der zweiten Basisstation BS2, die auch für Funkübertragungen im ersten Frequenzbereich F1 ausgebildet ist, dass sie eine Funkverbindung im ersten Frequenzbereich F1 wünscht und dazu aufgrund der Frequenzbereichsinformation FI auch berechtigt ist. Daraufhin wird zwischen der zweiten Basisstation BS2 und der dritten Teilnehmerstation UE3 eine dritte Funkverbindung V3 in dem ersten Frequenzbereich F1 aufgebaut und zur Übertragung von dritten Signalisierungsdaten SIG3 und dritten Nutzdaten D3 verwendet.

Alternativ zur Auswahl des ersten Frequenzbereichs F1 durch die dritte Teilnehmerstation UE3 kann die Auswahl des ersten Frequenzbereichs F1 auch durch die zweite Basisstation BS2 erfolgen. Diese hat über eine Leitungsverbindung zwischen dem ersten und dem zweiten Kernnetz CN1, CN2 ebenfalls die Frequenzbereichsinformation FI empfangen und ist somit darüber informiert, dass das erste Funkkommunikationssystem UMTS1 Funkverbindungen im ersten Frequenzbereich F1 beispielsweise mit der von dem zweiten Funkkommunikationssystem UMTS2 verwenden Funkzugangstechnologie zulässt. Die Erfindung ermöglicht somit, dass in dem Überlappungsbereich des ersten Funkabdeckungsbereichs FA1 und des zweiten Funkabdeckungsbereichs FA2 die erste Teilnehmerstation UE1, die dem ersten Funkkommunikationssystem UMTS1 zugeordnet ist und die dritte Teilnehmerstation UE3, die dem zweiten Funkkommunikationssystem UMTS2 zugeordnet ist, zeitgleich in dem ersten Frequenzbereich F1, der dem ersten Funkkommunikationssystem UMTS1 zugeordnet ist, Signalisierungsdaten und Nutzdaten über Funkverbindungen übertragen.

Aus Gründen einer übersichtlichen Darstellung sind der erste und der zweite Funkabdeckungsbereich FA1, FA2 des ersten und des zweiten Funkkommunikationssystems UMTS1, UMTS2 als Kreise dargestellt, ohne damit zum Ausdruck bringen zu wollen, dass die Erfindung hierauf beschränkt sein soll. Ein Funkabdeckungsbereich kann selbstverständlich auch eine einzelne Funkzelle eines zellularen Funkkommunikationssystems sein oder aus beliebigen Funkzellen gegebenenfalls unterschiedlicher Größe zusammengesetzt sein, wobei eine oder mehrere Funkzellen jeweils von einer Basisstation versorgt werden. Die Darstellung aus Figur 1 kann insofern auch als die Darstellung zweier Funkzellen der beiden Funkkommunikationssysteme UMTS1, UMTS2 mit einem Überlappungsbereich betrachtet werden.

In anderen, nicht dargestellten Überlappungsbereichen, das heißt, in anderen überlappenden Funkzellen, die beispielsweise von anderen Basisstationen der Funkkommunikationssysteme UMTS1, UMTS2 versorgt werden, können ebenfalls Teilnehmerstationen der beiden Funkkommunikationssysteme UMTS1, UMTS2 zeitgleich im ersten Frequenzbereich F1 oder in einem anderen Frequenzbereich des ersten Funkkommunikationssystems UMTS1 betrieben werden. Selbstverständlich können in benachbarten Überlappungsbereichen von Funkzellen der Funkkommunikationssysteme UMTS1, UMTS2 unterschiedliche Frequenzbereiche zeitgleich von in den entsprechenden Überlappungsbereichen lokalisierten Teilnehmerstationen für Funkverbindungen genutzt werden.

Mit Vorteil kann das erfindungsgemäße Verfahren auch dann durchgeführt werden, wenn sich erste und zweite Basisstation BS1, BS2 am gleichen Ort befinden oder räumlich benachbart, beispielsweise auf dem gleichen Gebäude, angeordnet sind und annähernd deckungsgleiche erste und zweite Funkabdeckungsbereiche FA1, FA2 haben.

In einem nicht dargestellten Ausführungsbeispiel befindet sich die zweite Basisstation BS2 innerhalb des ersten Funkabdeckungsbereich FA1 und ist so ausgebildet, dass sie die Frequenzbereichsinformation FI auf dem Rundsendekanal BCCH der ersten Basisstation BS1 empfängt und auswertet. Eine Übertragung der Frequenzbereichsinformation FI über das erste und zweite Kernnetz CN1, CN2 ist in diesem Ausführungsbeispiel nicht mehr erforderlich, kann aber selbstverständlich zusätzlich mit Vorteil erfolgen.

Selbstverständlich können die erste und zweite Funkzugangstechnologie sowohl gleich als auch unterschiedlich sein.

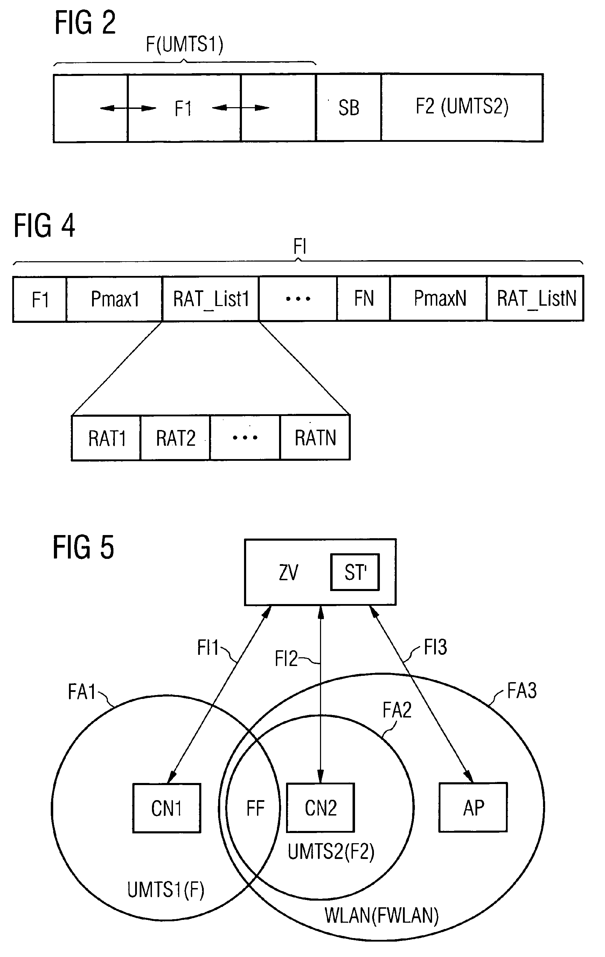

Figur 2 zeigt schematisch den Frequenzbereich F der dem ersten Funkkommunikationssystems UMTS1 für Funkverbindungen zur Verfügung steht und diesem, beispielsweise aufgrund eines Lizenzerwerbs für den Frequenzbereich F, fest zugeordnet ist. Der Frequenzbereich F ist beispielsweise durch einen nicht genutzten Frequenzbereich SB von dem zweiten Frequenzbereich F2, der dem zweiten Funkkommunikationssystem UMTS2 fest für die Funkversorgung seiner Teilnehmerstationen zugewiesen ist, getrennt. Der erste Frequenzbereich F1, der gemeinsam und zeitgleich von Teilnehmerstationen beider Funkkommunikationssysteme UMTS1, UMTS2 genutzt werden kann, liegt beliebig innerhalb des Frequenzbereichs F des ersten Funkkommunikationssystems UMTS1. Die beliebige Lage sowie die beliebige Breite des ersten Frequenzbereichs F1, ist durch nach links und nach rechts laufende Pfeile an der linken und rechten Grenze des ersten Frequenzbereichs F1 veranschaulicht.

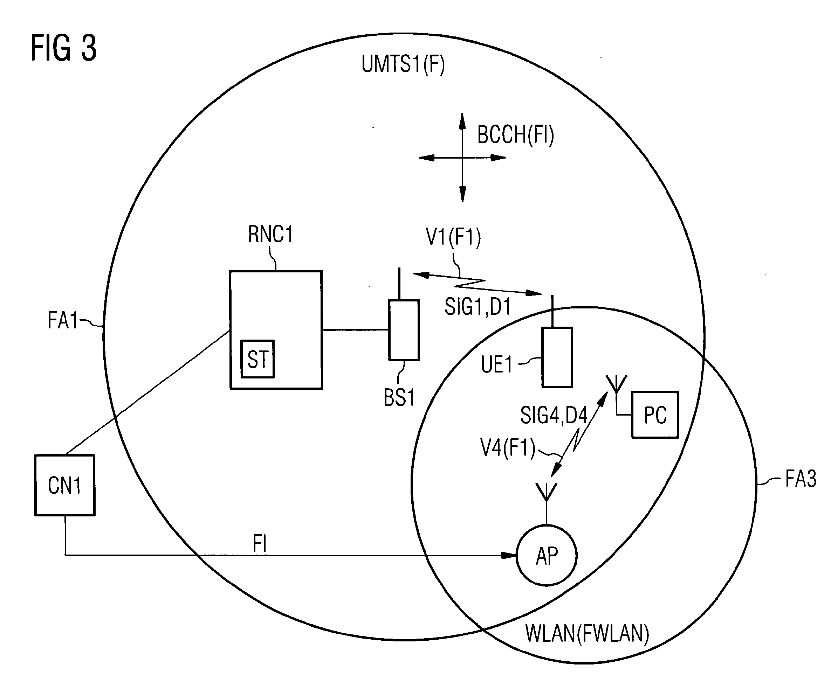

Figur 3 zeigt schematisch ein weiteres Ausführungsbeispiel der Erfindung anhand des ersten Funkkommunikationssystem UMTS1 gemäß Figur 1 und anhand eines drahtlosen lokalen Netzes WLAN. Ebenso wie bereits zuvor anhand von Figur 1 beschrieben, hat die erste Teilnehmerstation UE1 die erste Funkverbindung V1 in dem ersten Frequenzbereich F1 mit der ersten Basisstation BS1, die mit dem ersten Funkzugangskontroller RNC1 verbunden ist. Über die erste Funkverbindung werden die ersten Signalisierungsdaten SIG1 und die ersten Nutzdaten D1 übertragen. Über den Rundsendekanal BCCH sendet die erste Basisstation BS1 die Frequenzbereichsinformation FI. Das erste Kernnetz CN1 ist in diesem Ausführungsbeispiel über eine elektrische oder optische Leitung mit einem Funkzugangspunkt AP des drahtlosen lokalen Netzes WLAN verbunden. Über diese Leitung wird die Frequenzbereichsinformation FI an den Funkzugangspunkt AP signalisiert. Der Funkzugangspunkt AP versorgt einen dritten Funkabdeckungsbereich FA3, der einen Überlappungsbereich mit dem ersten Funkabdeckungsbereich FA1 des ersten Funkkommunikationssystems UMTS1 aufweist. In diesem Überlappungsbereich befindet sich außer der ersten Teilnehmerstation UE1 auch ein tragbarer Computer PC, der über eine Funkvorrichtung verfügt, mit der Funkverbindungen verschiedener Funkstandards aufgebaut werden können, insbesondere jedoch kann der Computer PC Verbindungen mit dem Funkzugangspunkt AP, beispielsweise gemäß dem IEEE 802.11 Standard aufbauen. Weiterhin hört der Computer PC den Rundsendekanal BCCH ab und empfängt dort die Frequenzbereichsinformation FI.

In gleicher Weise wie zuvor am Beispiel von Figur 1 für die dritte Teilnehmerstation UE3 beschrieben, wird im Ausführungsbeispiel von Figur 3 eine vierte Funkverbindung V4 in dem ersten Frequenzbereich F1 zwischen dem Computer PC und dem Funkzugangspunkt AP aufgebaut. Dieser Verbindungsaufbau wird entweder vom Funkzugangspunkt AP oder von dem Computer PC initiiert. Über die vierte Funkverbindung V4 werden vierte Signalisierungsdaten SIG4 und vierte Nutzdaten D4 zwischen den Computer PC und dem Funkzugangspunkt AP ausgetauscht. Zu dem Verbindungsaufbau zwischen dem Computer PC und dem Zugangspunkt AP in dem ersten Frequenzbereich F1 kommt es beispielsweise, weil in einem Frequenzbereich FWLAN des drahtlosen lokalen Netzes WLAN keine weiteren Funkverbindungen aufgebaut werden können. Bestehende Funkverbindungen im Frequenzbereich FWLAN des drahtlosen lokalen Netzes WLAN sind aus Gründen der Übersichtlichkeit in Figur 3 nicht dargestellt.

Das anhand von Figur 3 beschriebene Ausführungsbeispiel ist sowohl durchführbar, wenn das drahtlose Netz WLAN und das erste Funkkommunikationssystem UMTS1 unterschiedliche Betreiber, als auch gleiche Betreiber haben. Weiterhin kann die Erfindung auch dann vorteilhaft eingesetzt werden, wenn der Funkzugangspunkt AP direkt in der ersten Basisstation BS1 untergebracht ist. In diesem Fall kann die Frequenzbereichsinformation FI von dem ersten Funkzugangskontroller RNC1 direkt über eine im Vergleich zu Figur 1 kurze elektrische oder optische Leitung oder über eine Funkverbindung (z.B via Bluetooth) an den Funkzugangspunkt AP übertragen werden.

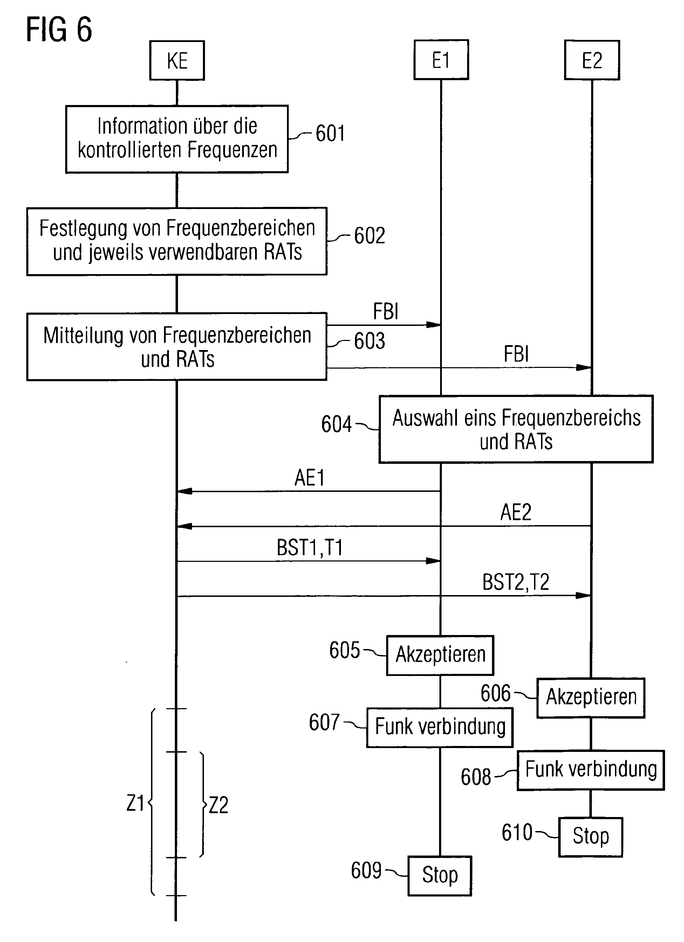

Figur 4 zeigt schematisch eine bevorzugte Ausführungsform der Frequenzbereichsinformation FI. Für insgesamt N Frequenzbereiche F1, ..., FN wird jeweils eine maximal zu verwendende Sendeleistung Pmax1, ..., PmaxN angegeben, sowie jeweils eine Liste RAT_List1, ..., RAT_ListN der in dem jeweiligen Frequenzbereich F1, ..., FN verwendbaren Funkzugangstechnologien RAT1, RAT2,...RATN. Teilnehmerstationen oder Funkstationen (zum Beispiel Basisstationen oder Funkzugangspunkte), die die Frequenzbereichsinformation FI empfangen, können nun aus der Liste von Frequenzbereichen F1, ..., FN einen Frequenzbereich auswählen und innerhalb des Frequenzbereichs aus der jeweiligen Liste RAT_List1, ..., RAT_ListN auswählen, welche Funkzugangstechnologie RAT1, RAT2,...RATN nachfolgend für Funkverbindungen verwendet werden soll.

Funkzugangstechnologien sind beispielsweise Funkzugangstechnologien gemäß dem GSM-Standard, gemäß dem UMTS-Standard, gemäß HiperLAN-Standards, gemäß IEEE 802.11a bis i Standards oder gemäß dem Bluetooth-Standard. Selbstverständlich können auch zukünftige Funkzugangstechnologien zur Auswahl signalisiert werden.

Figur 5 zeigt schematisch ein weiteres Ausführungsbeispiel zur Durchführung der Erfindung. Eine zentrale Vorrichtung ZV mit einer Steuereinheit ST' verwaltet die Belegung von Funkressourcen wenigstens eines Frequenzbereichs FF. Die zentrale Vorrichtung ZV verfügt aufgrund ihrer Verwaltungsfunktion und beispielsweise auf Grund von Messungen von Teilnehmerstationen, die Funkverbindungen in dem Frequenzbereich FF haben, über Informationen darüber, welche Funkzugangstechnologien in dem Frequenzbereich FF verwendet werden und wie hoch der Auslastungsgrad ist, das heißt, wie groß Interferenzen sind und wie viele Funkverbindungen mit einer jeweiligen Datenrate in dem Frequenzbereich betrieben werden. Auf Grund dieser Informationen sendet die zentrale Vorrichtung, die nicht Bestandteil eines bestimmten Funkkommunikationssystems ist, sondern Funkkommunikationssystemen hierarchisch übergeordnet ist, eine erste Frequenzbereichsinformation FI1 an das erste Kernnetz CN1 des ersten Funkkommunikationssystems UMTS1, eine zweite Frequenzbereichsinformation FI2 an das zweite Kernnetz CN2 des zweiten Funkkommunikationssystems UMTS2 und eine dritte Frequenzbereichsinformation FI3 an den Funkzugangspunkt AP des drahtlosen Netzes WLAN. Nachfolgend wählen die drei Funkkommunikationssysteme UMTS1, UMST2, WLAN den Frequenzbereich FF zumindest für einige Teilnehmerstationen aus und es werden jeweils Verbindungen in dem Frequenzbereich FF aufgebaut und Daten übertragen. Die Frequenzbereichsinformationen FI1, FI2, FI3 sowie die nachfolgend mit der zentralen Vorrichtung abgestimmte Auswahl des Frequenzbereichs FF für Datenübertragungen bewirken daher eine durch die zentrale Vorrichtung festgelegte, zumindest zeitweise gleichzeitige Übertragung von Daten für Teilnehmerstationen, die sich in den Überlappungsbereichen der jeweiligen Funkabdeckungsbereiche FA1, FA2, FA3 befinden. Die Verwendung des Frequenzbereichs FF im Überlappungsbereich der Funkabdeckungsbereiche FA1, FA2, FA3 ist in Figur 5 durch die Bezugszeichen "FF" im Überlappungsbereich dargestellt.

Die ersten, zweiten und dritten Frequenzbereichsinformationen FI1, FI2, FI3 sind in gleicher Weise aufgebaut wie die in Figur 4 dargestellte Frequenzbereichsinformation FI und können selbstverständlich inhaltlich sowohl gleich als auch unterschiedlich sein. Die ersten, zweiten und dritten Frequenzbereichsinformationen FI1, FI2, FI3 stimmen somit entweder in allen Frequenzbereichen, Listen von Funkzugangstechnologien und jeweiligen maximalen Sendeleistungen (vgl. Figur 4) überein oder unterscheiden sich in wenigstens einem Frequenzbereich, einer Liste von Funkzugangstechnologien oder einer maximalen Sendeleistung.

Auf die zuvor beschriebene Weise steuert die zentrale Vorrichtung ZV den zeitgleichen Zugriff auf den wenigstens einen Frequenzbereich FF, der keinem der Funkkommunikationssysteme UMTS1, UMTS2, WLAN und somit insbesondere keinem Betreiber eines Funkkommunikationssystems fest zugeordnet ist. Ein derartiger Frequenzbereich liegt beispielsweise in Deutschland zwischen 2010 MHz und 2020 MHz und ist für Übertragungen gemäß dem UMTS-TDD-Standard (TDD: Time Division Duplex) reserviert ohne jedoch einem bestimmten Betreiber zugeordnet zu sein.

In welcher Weise die Funkkommunikationssysteme UMTS1, UMTS2, WLAN die jeweiligen Frequenzbereichsinformationen FI1, FI2, FI3 auswerten, Frequenzbereiche und Funkzugangstechnologien auswählen und Funkverbindungen aufbauen, wird der zentralen Vorrichtung ZV selbstverständlich mitgeteilt, um gemäß der erfolgten Auswahl beispielsweise zukünftige Frequenzbereichsinformationen anpassen zu können oder gegebenenfalls eine Auswahl abzulehnen.

Figur 6 zeigt schematisch eine Ausgestaltung eines erfindungsgemäßen Verfahrens, das einen gleichzeitigen Funkverbindungsaufbau für Teilnehmerstationen unterschiedlicher Funkkommunikationssysteme in einem einzigen Frequenzbereich ermöglicht.

Eine Kontrolleinheit KE, z.B. der erste Funkzugangskontroller aus Figuren 1 und 3 oder die zentrale Vorrichtung ZV aus Figur 5, sammelt in Kasten 601 Informationen über die von ihr kontrollierten Frequenzen, das heißt über die von ihr verwalteten Frequenzbereiche. Hierzu zählen Signalisierungsdaten aus Funkkommunikationssystemen, die bereits mit den kontrollierten Frequenzen beziehungsweise in den kontrollierten Frequenzbereichen betrieben werden, sowie Messungen, insbesondere Interferenzmessungen von Teilnehmerstationen der entsprechenden Funkkommunikationssysteme. Anhand der Informationen legt die Kontrolleinheit KE in Kasten 602 Frequenzbereiche sowie in den Frequenzbereichen verwendbare Funkzugangstechnologien (RAT: Radio Access Technologies) fest und teilt diese Festlegung in Kasten 603 in Form einer Frequenzbereichsinformation FBI einer ersten und einer zweiten Einheit E1, E2 mit.

Die erste Einheit E1 gehört beispielsweise zu einem ersten Funkkommunikationssystem, während die zweite Einheit E2 zu einem Funkkommunikationssystem gehört. Beispielsweise handelt es sich bei der ersten Einheit E1 um die dritte Teilnehmerstation UE3 und bei der zweiten Einheit E2 um den Computer PC. Die beiden Einheiten E1, E2 können selbstverständlich auch dem gleichen Funkkommunikationssystem zugeordnet sein. Weiterhin kann es sich bei den beiden Einheiten E1, E2 um netzseitige Stationen eines Funkkommunikationssystems handeln (z.B. Funkstationen wie die erste Basisstation BS2, die zweite Basisstation BS2 oder den Funkzugangspunkt AP).

Anhand der Mitteilung wählen die erste und die zweite Einheit E1, E2 in Kasten 604 jeweils einen Frequenzbereich und eine Funkzugangstechnologie aus. Die Auswahl kann sowohl zeitgleich als auch zeitlich versetzt erfolgen. Die Auswahl teilen die erste Einheit E1 und die zweite Einheit E2 der Kontrolleinheit KE jeweils mit einer entsprechenden Information AE1, AE2 mit. Die Kontrolleinheit KE bestätigt die Auswahl jeweils mit einer entsprechenden Bestätigungsinformation BST1, BST2 und teilt der ersten Einheit E1 einen ersten Zähler T1 und der zweiten Einheit E2 einen zweiten Zähler T2 mit. Den beiden Zählern T1, T2 ist entnehmbar, wie lange die erste beziehungsweise die zweite Einheit E1, E2 eine Verbindung in dem ausgewählten Frequenzbereich mit der ausgewählten Funkzugangstechnologie aufrechterhalten dürfen. Nach Empfang der Zähler T1, T2 akzeptieren die erste und die zweite Einheit E1, E2 jeweils die Bestätigung ihrer Auswahl in den Kästen 605 und 606 und bauen in den Kästen 607 und 608 jeweils eine Funkverbindung auf. Nach Ablauf des durch den ersten Zähler T1 signalisierten Zeitraums Z1 beendet die erste Einheit E1 ihre Funkverbindung in Kasten 609, während die zweite Einheit E2 ihre Funkverbindung erst nach Ablauf des durch den zweiten Zähler T2 signalisierten Zeitraums Z2 in Kasten 610 beendet.

Anstatt einer Bestätigungsinformation kann die Kontrolleinheit KE selbstverständlich auch die Auswahl einer der Einheiten E1 oder E2 ablehnen und den Verbindungsaufbauwunsch abbrechen oder einen alternativen Funkbereich beziehungsweise eine alternative Funkzugangstechnologie vorschlagen. Dieser Vorschlag wird von der betroffenen Einheit E1 oder E2 entweder akzeptiert und eine Funkverbindung wird entsprechend aufgebaut, oder es kommt zu keinem Aufbau einer Funkverbindung.

Den jeweils durch die Zähler T1, T2 signalisierten Zeitraum Z1, Z2 kann die Kontrolleinheit KE entweder selbst festlegen, beispielsweise anhand einer ihr bekannten Auslastung des ausgewählten Frequenzbereichs, oder er wird ihr von der jeweiligen Einheit E1 oder E2 bei der Signalisierung der Auswahl eines Frequenzbereichs mitgeteilt. Im letzten Fall hat die entsprechende Einheit E1 oder E2 beispielsweise von einer Vergebührungseinheit einen bestimmten Zeitraum zur Nutzung eines Frequenzbereichs gekauft und sendet der Kontrolleinheit KE eine Signalisierungsdaten, denen der gekaufte Zeitraum zu entnehmen ist.

## Patentansprüche

1. Verfahren zum Betrieb eines ersten Funkkommunikationssystems (UMTS1, UMTS2, WLAN) in einem Frequenzbereich (F1; FF), bei dem
durch eine Vorrichtung (RNC1; ZV; KE) eine Festlegung für den Frequenzbereich (F1; FF) erfolgt, ob das erste Funkkommunikationssystem (UMTS1, UMTS2, WLAN) und/oder ob wenigstens ein zweites Funkkommunikationssystem (UMTS1, UMTS2, WLAN) den Frequenzbereich (F1; FF) für Übertragungen nutzen darf, wobei das erste und das zweite Funkkommunikationssystem (UMTS1, UMTS2, WLAN) jeweils einen Funkabdeckungsbereich (FA1, FA2, FA3) aufweisen,
**dadurch gekennzeichnet,**
**dass** das erste und das zweite Funkkommunikationssystem (UMTS1, UMTS2, WLAN) den Frequenzbereich (F1; FF) gemäß der Festlegung der Vorrichtung (RNC1; ZV; KE) in einem räumlichen Überlappungsbereich der jeweiligen Funkabdeckungsbereiche (FA1, FA2, FA3) zumindest zeitweise gleichzeitig für Übertragungen nutzen.

2. Verfahren nach Anspruch 1,
**dadurch gekennzeichnet,**
**dass** zumindest eines der wenigstens zwei Funkkommunikationssysteme (UMTS1, UMTS2) ein zellulares Funkkommunikationssystem ist.

3. Verfahren nach Anspruch 1 oder 2,
**dadurch gekennzeichnet,**
**dass** die wenigstens zwei Funkkommunikationssysteme (UMTS1, UMTS2; WLAN) in dem Frequenzbereich (F1) Signalisierungsdaten (SIG1, SIG3; SIG4) übertragen.

4. Verfahren nach einem der Ansprüche 1 bis 3,
**dadurch gekennzeichnet,**
**dass** die wenigstens zwei Funkkommunikationssysteme (UMTS1, UMTS2; WLAN) in dem Frequenzbereich Nutzdaten (D1, D3; D4) übertragen.

5. Verfahren nach einem der Ansprüche 1 bis 4,
**dadurch gekennzeichnet,**
**dass** die Vorrichtung (RNC1; ZV; KE) wenigstens einem der wenigstens zwei Funkkommunikationssysteme (UMTS1, UMTS2, WLAN) eine maximale Sendeleistung (Pmax1) für Übertragungen in dem Frequenzbereich (F1) vorgibt.

6. Verfahren nach einem der Ansprüche 1 bis 5,
**dadurch gekennzeichnet,**
**dass** die wenigstens zwei Funkkommunikationssysteme (UMTS1, UMTS2, WLAN) unterschiedliche oder gleiche Funkzugangstechnologien verwenden.

7. Verfahren nach einem der Ansprüche 1 bis 6,
**dadurch gekennzeichnet,**
**dass** die wenigstens zwei Funkkommunikationssysteme (UMTS1, UMTS2, WLAN) von dem gleichen Betreiber oder unterschiedlichen Betreibern betrieben werden.

8. Verfahren nach einem der Ansprüche 1 bis 7,
**dadurch gekennzeichnet,**
**dass** die Vorrichtung (RNC1; ZV; KE) wenigstens einem der wenigstens zwei Funkkommunikationssysteme (UMTS1, UMTS2, WLAN) mitteilt, welche Funkzugangstechnologien (RAT_List1) eine Teilnehmerstation des entsprechenden Funkkommunikationssystems in dem Frequenzbereich (F1; FF; FB1) verwenden darf.

9. Verfahren nach einem der Ansprüche 1 bis 8,
**dadurch gekennzeichnet,**
**dass** die Vorrichtung (RNC1) ein Bestandteil eines der wenigsten zwei Funkkommunikationssysteme (UMTS1) ist.

10. Verfahren nach einem der Ansprüche 1 bis 9,
**dadurch gekennzeichnet,**
**dass** die Vorrichtung (RNC1; ZV; KE) mit den wenigsten zwei Funkkommunikationssystemen (UMTS1, UMTS2, WLAN) über eine Leitung und/oder über wenigstens einen Funkkanal kommuniziert.

11. Verfahren nach Anspruch 10,
**dadurch gekennzeichnet,**
**dass** als der wenigstens eine Funkkanal ein Rundsendekanal (BCCH) verwendet wird.

12. Verfahren nach einem der Ansprüche 10 oder 11,
**dadurch gekennzeichnet,**
**dass** der Funkkanal von Teilnehmerstationen (UE3; PC) und/oder Funkstationen (BS2; AP) der wenigstens zwei Funkkommunikationssysteme (UMTS1, UMTS2, WLAN) empfangen wird.

13. Verfahren nach einem der Ansprüche 1 bis 12,
**dadurch gekennzeichnet,**
**dass** die Vorrichtung (RNC1; ZV; KE) für wenigstens eines der wenigstens zwei Funkkommunikationssysteme (UMTS1, UMTS2, WLAN) festlegt, für welchen Zeitraum (Z1, Z2) eine Teilnehmerstation (E1, E2) des entsprechenden Funkkommunikationssystems in dem Frequenzbereich (F1; FF) übertragen darf.

14. Vorrichtung (RNC1; ZV; KE) mit Mitteln (ST; ST') zum Festlegen für wenigstens eines von wenigstens zwei Funkkommunikationssystemen (UMTS1, UMTS2, WLAN), ob das wenigstens eine Funkkommunikationssystem einen Frequenzbereich (F1) für Übertragungen nutzen darf, wobei die wenigstens zwei Funkkommunikationssysteme UMTS1, UMTS2, WLAN) jeweils einen Funkabdeckungsbereich (FA1, FA2, FA3) aufweisen,
**dadurch gekennzeichnet,**
**dass** die Mittel (ST, ST') zum Festlegen derart ausgestaltet sind, dass eine Festlegung so erfolgt, dass die wenigstens zwei Funkkommunikationssysteme (UMTS1, UMTS2, WLAN) den Frequenzbereich (F1) in einem räumlichen Überlappungsbereich der jeweiligen Funkabdeckungsbereiche (FA1, FA2, FA3) zumindest zeitweise gleichzeitig für Übertragungen nutzen.

15. Funkkommunikationssystem (UMTS1, UMTS2, WLAN) mit einem ersten Funkabdeckungsbereich (FA1, FA2, FA3), mit Teilnehmerstationen (UE1, UE2, UE3; PC) und Funkstationen (BS1, BS2; AP), mit Mitteln (UE2, UE3, BS2; PC, AP) zum Aufbau von Funkverbindungen (V2) zwischen Funkstationen (BS2; AP) und Teilnehmerstationen (UE2, UE3; PC) in einem Frequenzbereich (F, F2, FWLAN) und mit Mitteln (CN1, CN2, BS2, UE3; AP, PC) zur Kommunikation mit einer Vorrichtung (RNC1; ZV; KE) insbesondere einer Vorrichtung gemäß Anspruch 14,
**dadurch gekennzeichnet,**
**dass** Mittel (BS2, UE3; AP, PC) vorhanden sind, eine Funkverbindung (V3; V4) zwischen einer Funkstation (BS2; AP) und einer Teilnehmerstation (UE3; PC), gemäß einer Festlegung der Vorrichtung (RNC1; ZV; KE), in einem anderen Frequenzbereich (F1; FF) aufzubauen, der ebenfalls für Funkverbindungen zwischen Teilnehmerstationen (UE1, UE2, UE3; PC) und Funkstationen (BS1, BS2; AP) wenigstens eines anderen Funkkommunikationssystems (UMTS1, UMTS2, WLAN) mit einem zweiten Funkabdeckungsbereich (FA1, FA2, FA3) verwendet wird, wobei die Funkverbindung (V3; V4) in einem räumlichen Überlappungsbereich des ersten Funkabdeckungsbereich (FA1, FA2, FA3) und des zweiten Funkabdeckungsbereichs (FA1, FA2, FA3) aufgebaut wird.

16. Funkkommunikationssystem nach Anspruch 15,
**dadurch gekennzeichnet,**
**dass** die Vorrichtung (RNC1) Bestandteil des wenigstens einen anderen Funkkommunikationssystems (UMTS1) ist.

17. Funkkommunikationssystem (UMTS1) mit Teilnehmerstationen (UE1) und Funkstationen (BS1), mit Mitteln (BS1, UE1) zum Aufbau von Funkverbindungen (V1) zwischen Funkstationen (BS1) und Teilnehmerstationen (UE1) in einem Frequenzbereich (F1)
und mit einer Vorrichtung (RNC1) mit Mitteln (ST) zum Festlegen für wenigstens ein zweites Funkkommunikationssystem (UMTS2; WLAN), ob das wenigstens eine zweite Funkkommunikationssystem (UMTS2; WLAN) den Frequenzbereich (F1) für Übertragungen nutzen darf, wobei die wenigstens zwei Funkkommunikationssysteme (UMTS1, UMTS2; UMTS1, WLAN) jeweils einen Funkabdeckungsbereich (FA1, FA2; FA1, FA3) aufweisen,
**dadurch gekennzeichnet,**
**dass** die Mittel (ST) zum Festlegen derart ausgestaltet sind, dass eine Festlegung so erfolgt, dass die wenigstens zwei Funkkommunikationssysteme (UMTS1, UMTS2; UMTS1, WLAN) den Frequenzbereich (F1) in einem räumlichen Überlappungsbereich der jeweiligen Funkabdeckungsbereiche (FA1, FA2; FA1, FA3) zumindest zeitweise gleichzeitig für Übertragungen nutzen.
